# EUROPÄISCHE PATENTANMELDUNG

(11) **EP 0 987 611 A2**
(43) Veröffentlichungstag der Anmeldung: **22.03.2000**
(21) Anmeldenummer: 99202832.4
(22) Anmeldetag: 01.09.1999
(51) Int. Cl.: G05B 19/042

(54) **Anordung zur Steuerung eines elektronischen Gerätes**

(30) Priorität: 11.09.1998 DE 19841640
(71) Anmelder: Philips Corporate Intellectual Property GmbH, 52064 Aachen (DE); Koninklijke Philips Electronics N.V., 5621 BA Eindhoven (NL)
(72) Erfinder: Benner, Günter, Röntgenstrasse 24, 22335 Hamburg (DE); Siedel, Frank, Röntgenstrasse 24, 22335 Hamburg (DE)
(74) Vertreter: von Laue, Hanns-Ulrich

(57) **Zusammenfassung**

Bei einer Anordnung zur Steuerung eines elektronischen Gerätes, insbesondere eines TV-Gerätes, welches einen Mikroprozessor (1) aufweist, dessen Programm in einem ROM-Speicher (4) enthalten ist und mittels dessen über einen Steuer-Bus (21), insbesondere einen I²C-Bus (22), in dem Gerät vorgesehene Baugruppen (31), insbesondere integrierte Schaltkreise, steuerbar sind, ist für einen möglichst flexiblen Einsatz der Anordnung sowie deren einfache Anpassung an veränderte Baugruppen (31) vorgesehen,
daß eine in einem ROM-Speicher (7) abgelegte Funktionskodc-Tabelle vorgesehen ist, in welcher für jede auslösbare Funktion ein zugehöriger Funktionskode vermerkt ist,
daß eine in einem veränderbaren oder löschbaren Speicher (22) abgelegte Baugruppentabelle vorgesehen ist, in welcher für die Funktionscodes vermerkt ist, welche Baugruppe (31) die Funktion ausführen kann und wie die Baugruppe (31) zur Ausführung der Funktion anzusprechen ist,
und daß der Mikroprozessor (1) bei Auslösung einer Funktion mittels eines Bedienelements (10) des Gerätes oder einer externen Einheit (11, 12) die ausgelöste Funktion in der Weise ausführt, daß zunächst aus der Funktionskode-Tabelle der der Funktion zugeordnete Funktionskode ermittelt wird und dann die gemäß den Angaben der Baugruppentabelle für diesen Funktionscode vorgesehene Baugruppe (31) nach Maßgabe der Daten der Baugruppentabelle zur Durchführung der ausgelösten Funktion angesprochen wird.

## Beschreibung

Die Erfindung betrifft eine Anordnung zur Steuerung eines elektronischen Gerätes, insbesondere eines TV-Gerätes, welches einen Mikroprozessor aufweist, dessen Programm in einem ROM-Speicher enthalten ist und mittels dessen über einen Steuer-Bus, insbesondere einen I²C-Bus, in dem Gerät vorgesehene Baugruppen, insbesondere integrierte Schaltkreise, steuerbar sind.

Bei derartigen nach dem Stande der Technik bekannten Anordnungen wird in dem ROM-Speicher nicht nur das Programm des Mikroprozessors abgelegt, sondern es sind in diesem ROM auch nicht löschbare Informationen über die Baugruppen gespeichert. Aus diesen Informationen erkennt der Mikroprozessor, in welcher Weise die Baugruppen anzusprechen sind und welche Funktionen mittels den einzelnen Baugruppen auf welche Weise durchführbar sind.

Bei einer derartigen Anordnung besteht jedoch der Nachteil, daß die Informationen, die in dem ROM abgelegt sind, nur für eine ganz bestimmte Konstellation von Baugruppen gültig ist. Ändert sich eine Baugruppe bzw. die Art und Weise wie diese anzusprechen ist, ist der Mikroprozessor nicht mehr in der Lage, diese Baugruppe ordnungsgemäß zu steuern. Entsprechendes gilt, wenn Baugruppen hinzu kommen oder entfallen. Dies hat also zur Folge, daß bei jeder kleinen Änderung der Konstellation der Baugruppen des Gerätes eine Änderung der in dem ROM fest angewandten Informationen nötig wäre. Dies ist jedoch bei einem ROM-Speicher nicht möglich. Es müßte also der Speicher innerhalb des ROM's geändert werden, was bei einem derartigen Festspeicher großen Aufwand erfordert, da die entsprechenden Masken zur Herstellung geändert werden müssen. Schon programmierte IC's können nicht mehr umprogrammiert werden und müßten vernichtet werden.

Es ist Aufgabe der Erfindung, eine Anordnung der eingangs genannten Art anzugeben, welche auf einfache Art und wirtschaftlich an veränderte Konstellationen der Baugruppen anpaßbar ist.

Diese Aufgabe ist erfindungsgemäß dadurch gelöst, daß eine in einem ROM-Speicher abgelegte Funktionskode-Tabelle vorgesehen ist, in welcher für jede auslösbare Funktion ein zugehöriger Funktionskode vermerkt ist,
daß eine in einem veränderbaren oder löschbaren Speicher abgelegte Baugruppentabelle vorgesehen ist, in welcher für die Funktionscodes vermerkt ist, welche Baugruppe die Funktion ausführen kann und wie die Baugruppe zur Ausführung der Funktion anzusprechen ist,
und daß der Mikroprozessor bei Auslösung einer Funktion mittels eines Bedienelements des Gerätes oder einer externen Einheit die ausgelöste Funktion in der Weise ausführt, daß zunächst aus der Funktionskode-Tabelle der der Funktion zugeordnete Funktionskode ermittelt wird und dann die gemäß den Angaben der Baugruppentabelle für diesen Funktionscode vorgesehene Baugruppe nach Maßgabe der Daten der Baugruppentabelle zur Durchführung der ausgelösten Funktion angesprochen wird.

In einem ROM-Speicher, der vorzugsweise identisch mit dem ROM-Speicher sein kann, in welchem das Programm des Mikroprozessors abgelegt ist, wird eine Funktionskode-Tabelle abgelegt. In dieser Funktionskode-Tabelle ist jeder Funktion, die durch eine der Baugruppen ausgeführt werden kann und die durch einen Bedienvorgang oder ein externes Gerät ausgelöst werden kann, ein individueller Funktionskode zugeordnet.

In einem löschbaren oder veränderbaren Speicher, also beispielsweise in einem EEPROM, ist eine Baugruppentabelle abgelegt. In dieser Baugruppentabelle sind den Funktionskodes, die in der Funktionskode-Tabelle auftauchen, vermerkt, welche Baugruppe die den Funktionskode zugeordnete Funktion ausführen kann und wie die Baugruppe dabei anzusprechen ist, damit die Funktion entsprechend durch die Baugruppe ausgeführt wird.

Wird durch einen Bedienvorgang, beispielsweise also einer Tastatur des Gerätes, oder durch ein externes Gerät, beispielsweise eine Infrarotfernbedienung oder auch ein Personelcomputer, ausgelöst, so überprüft der Mikroprozessor anhand der Funktionskode-Tabelle, welcher Funktionskode dieser ausgelösten Funktion zugeordnet ist. Mit dem anhand der Funktionskode-Tabelle ermittelten Funktionskode geht der Mikroprozessor dann in die in dem veränderbaren oder löschbaren Speicher abgelegte Baugruppentabelle. Anhand dieser Baugruppentabelle stellt der Mikroprozessor fest, welche Baugruppe für die ausgelöste Funktion zuständig ist und in welcher Weise diese Baugruppe zur Durchführung dieser Funktion ansprechbar ist.

Der wesentliche Vorteil der Erfindung besteht darin, daß bei Änderungen der Baugruppen eine Anpassung der Anordnung an die veränderten Bedingungen durch Änderungen der Informationen in dem veränderbaren oder löschbaren Speicher leicht möglich ist. Bei derartigen Veränderungen muß hingegen der Mikroprozessor und der Festwertspeicher (ROM) nicht verändert werden. Damit kann diese Einheit auch bei Änderungen des Gerätes bzw. der Baugruppen immer unverändert eingesetzt werden. Auch sind nachträgliche Änderungen der Baugruppen möglich.

Eine gemäß Anspruch 3 vorgesehene Ausgestaltung der Erfindung beinhaltet eine zusätzliche Nutzung der Funktionscode-Tabelle für die Darstellung der ausgelösten Funktion mittels eines On-Screen-Displays. Somit kann die Funktionskode-Tabelle zweifach genutzt werden. Sie kann zum einen zur Erzeugung des Funktionskodes eingesetzt werden, der dann in der Baugruppentabelle zur Suche der Baugruppe eingesetzt wird und sie kann außerdem zur Auslösung eines bestimmten On-Screen-Displays eingesetzt werden.

Gemäß einer weiteren Ausgestaltung nach Anspruch 4 ist in einem veränderbaren oder löschbaren Speicher, vorzugsweise in dem gleichen Speicher, in dem die Baugruppentabelle abgelegt ist, zusätzlich eine Statustabelle abgelegt. Anhand dieser Statustabelle wird für die Bedienelemente festgelegt, durch welche Tastenbetätigung bzw. Signale dieser Geräte welche Funktion ausgelöst werden soll.

Dadurch wird die Flexibilität der Anordnung weiter erhöht. Es dürfen sich nicht nur die Baugruppen verändern, die mittels des Mikroprozessors zu steuern sind, sondern auch die Bedienelemente.

Die erfindungsgemäße Lösung ist also sehr wirtschaftlich, da eine Änderung nur in dem löschbaren Speicher erfolgen muß, was auf elektronische Weise relativ einfach geschehen kann.

Die in dem veränderbaren oder löschbaren Speicher abgelegte Baugruppentabelle kann zusätzlich dazu eingesetzt werden, weitere Informationen über die Baugruppen zur Verfügung zu stellen. Dabei kann es sich beispielsweise, wie gemäß weiteren Ansprüchen vorgesehen ist, um Informationen zu der I²C-Bus-Steuer-Adresse, zur Prüfung der Baugruppen, zu Voreinstellungen der Baugruppen handeln. Ferner können für die Durchführung der Funktionen zusätzlich abgelegte Daten vorgesehen sein, wie z.B. der Offset zur Steuer-Bus-Adresse, eine Register-Adresse eines für die Durchführung der Funktion zu verändernden Registers sowie die Anzahl der dort zu verändernden Bits enthalten.

Damit ist eine sehr hohe Flexibilität erreicht, da jedwede Änderungen der Baugruppen leicht möglich sind und eine Anpassung der Anordnung über eine Anpassung der Daten in dem löschbaren Speicher leicht möglich ist.

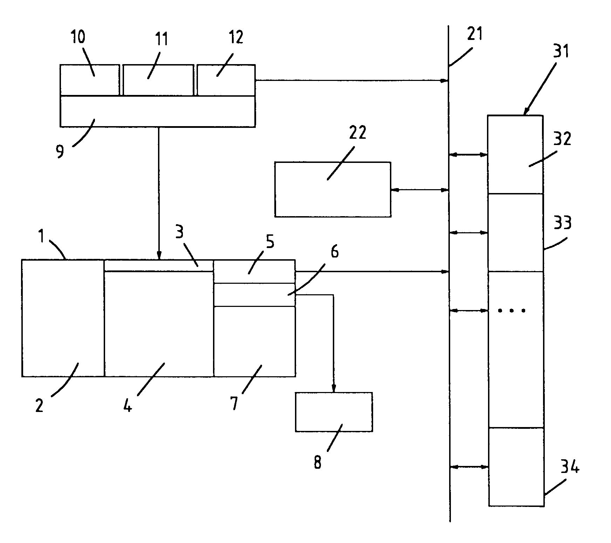

Nachfolgend wird ein Ausführungsbeispiel der Erfindung anhand der einzigen Figur der Zeichnung näher erläuert.

Die Figur zeigt in Form eines Blockschaltbildes eine erfindungsgemäße Anordnung zur Steuerung eines elektronischen Gerätes, bei dem es sich beispielsweise um ein Fernsehgerät handeln kann.

Die Steuerung bestimmter Funktionen in dem Gerät wird mittels eines Mikroprozessors 1 durchgeführt, welcher einen Rechenteil 2, eine Eingabeschnittstelle 3, einen Festwertspeicher ROM 4, eine I²C-Bus-Schnittstelle 5, eine On-Screen-Display-Schnittstelle 6 sowie einen zweiten Festwert-ROM-Speicher 7 aufweist.

Die On-Screen-Display-Schnittstelle 6 dient der Ausgabe von On-Screen-Display-Informationen, die abhängig von einer Auslösung einer Funktion auf einem externen Bildschirm 8 darzustellen sind.

Der Mikroprozessor 1 führt bestimmte Funktionen durch, die ihm von Eingabemedien 9 auf die Eingabeschnittstelle 3 signalisiert werden. Die Eingabemedien sind in der Darstellung der Figur symbolisch angedeutet. Es kann sich dabei beispielsweise um Tasten 10 an dem zu bedienenden Gerät, um eine dem Gerät zugeordnete Fernbedienung 11 oder auch um einen Personal-Computer 12 handeln.

Der Mikroprozessor 1 tauscht über die I²C-Bus-Schnittstelle 5 Daten über einen I²C-Bus mit anderen Einheiten aus.

Es ist ein veränderbarer bzw. löschbarer Speicher 22 vorgesehen, bei dem es sich vorzugsweise um ein EEPROM handelt, und welcher über den I²C-Bus 21 ansprechbar ist.

Es sind ferner Baugruppen 31 vorgesehen, welche jeweils bestimmte Funktionen in dem Gerät durchführen. Es kann sich dabei im Prinzip um eine große Anzahl von Baugruppen handeln; in der Figur sind symbolisch Baugruppen 32, 33 und 34 angedeutet.

Nachfolgend wird die Arbeitsweise dieser erfindungsgemäßen Anordnung zur Steuerung des Gerätes näher erläutert.

Wird beispielsweise über eine Taste der Fernbedienung 11 eine Funktion "Helligkeit erhöhen" ausgelöst, so wird diese Funktion über die Eingabe-Schnittstelle 3 des Mikroprozessors 1 an diesen gemeldet. Damit ist dem Mikroprozessor jedoch noch nicht bekannt, wie er diese Funktion ausführen kann und welche der Baugruppen 31 hierfür zuständig ist und wie diese anzusprechen ist. Daher ermittelt der Mikroprozessor 1 zunächst anhand einer in dem zweiten ROM-Speicher 7 abgelegten Funktionscode-Tabelle, welcher Funktionskode dieser Funktion "Helligkeit erhöhen" zugeordnet ist. Beispielsweise wird für die Funktion "Helligkeit erhöhen" der Funktionskode 27 ermittelt. Anhand dieses Funktionskodes 27 überprüft nun der Mikroprozessor 1 in dem EEPROM 22, das über den I²C-Bus 21 angesprochen wird, welche Baugruppe für diese Funktion zuständig ist. In dem EEPROM 22 sind Baugruppenlisten enthalten, in denen für jede Baugruppe deren Funktionen und die Art und Weise wie diese Funktion anzusprechen ist, abgelegt sind. In dem Beispielsfall "Helligkeit erhöhen" kann beispielsweise für den Funktionskode 27 anhand dieser Baugruppentabelle ermittelt werden, daß für diese Funktion die Baugruppe 33 zuständig ist. In den Daten der Baugruppentabelle ist ferner wenigstens vermerkt, an welcher Adresse relativ zu der I²C-Adresse der Baugruppe 33 diese Baugruppe zur Veränderung der Helligkeit anzusprechen ist. Ferner ist vermerkt, welche Bits in dem Register dieser Adresse die Veränderung der Helligkeit auslösen und wie viele Bits zu verändern sind.

Der Mikroprozessor 1 hat also nun anhand der Daten der Baugruppentabelle in dem EEPROM 22 festgestellt, daß die Baugruppe 33 für die Funktion "Helligkeit erhöhen" zuständig ist und ihm ist nun ebenfalls bekannt, unter welcher Adresse wie viele Bits zur Veränderung der Helligkeit vorgesehen sind. Der Mikroprozessor 1 kann daher nun über den I²C-Bus die Baugruppe 33 unmittelbar ansprechen und entsprechend dem Bedienbefehl die in der Baugruppe 33 in einem Register für die Veränderung der Funktion Helligkeit vorgesehenen Bits entsprechend dem Bedienbefehl variieren.

Durch diese Anordnung wird der Vorteil erreicht, daß Änderungen der Baugruppen 31, seien es Änderungen der Zahl der Baugruppen oder auch Änderungen der Bauart der Baugruppen, durch eine entsprechende Anpassung der Daten in der in dem EEPROM 22 abgelegten Baugruppentabelle auf einfache Weise möglich ist. Hierzu müssen die ROM-Speicher des Mikroprozessors 1 nicht verändert werden. Die ROM-Speicher des Mikroprozessors 1 enthalten nur allgemeine Informationen, wie beispielsweise den Funktionskode, der universell einsetzbar ist, und der unabhängig von den tatsächlich eingesetzten Baugruppen ist. Die Umsetzung einer Funktion, die einem Funktionskode zugeordnet ist und die abhängig von der Bauweise der Baugruppen 31 ist, wird anhand der Daten der Baugruppentabelle in dem veränderbaren Speicher 22 durchgeführt. Die Individualisierung der Baugruppen ist also nur anhand dieses Speichers 22 vorzunehmen, der entsprechend anpaßbar ist.

Zur Erhöhung der Flexibilität der Anordnung können in dem EEPROM 22 zusätzlich in einer Statustabelle Informationen darüber abgelegt sein, welche Bedienelemente der Tastatur 10, der Fernbedienung 11 oder des Personel-Computers 12 welche Funktionen zugeordnet sind. Damit wird eine Flexibilität in bezug auf diese Bedieneinheiten erreicht, deren Bedienelementen verschiedene Funktionen abhängig von der Statustabelle zugeordnet werden können.
Die Baugruppentabelle kann ebenfalls zusätzlich zu den oben erläuterten Informationen Daten darüber enthalten, welche I²C-Bus-Adresse die einzelnen Baugruppen 31 haben und wie diese zu prüfen sind. Ferner können in dem EEPROM 22 Informationen über Werkseinstellungen und/oder Benutzereinstellungen der einzelnen Baugruppen abgespeichert sein.

Grundsätzlich kann die Baugruppentabelle alle Informationen enthalten, die für die Steuerung der Baugruppen 31 mittels des Mikroprozessors 1 nötig oder sinnvoll sind.

## Patentansprüche

1. Anordnung zur Steuerung eines elektronischen Gerätes, insbesondere eines TV-Gerätes, welches einen Mikroprozessor (1) aufweist, dessen Programm in einem ROM-Speicher (4) enthalten ist und mittels dessen über einen Steuer-Bus (21), insbesondere einen I²C-Bus (22), in dem Gerät vorgesehene Baugruppen (31), insbesondere integrierte Schaltkreise, steuerbar sind,
dadurch gekennzeichnet,
daß eine in einem ROM-Speicher (7) abgelegte Funktionskode-Tabelle vorgesehen ist, in welcher für jede auslösbare Funktion ein zugehöriger Funktionskode vermerkt ist,
daß eine in einem veränderbaren oder löschbaren Speicher (22) abgelegte Baugruppentabelle vorgesehen ist, in welcher für die Funktionscodes vermerkt ist, welche Baugruppe (31) die Funktion ausführen kann und wie die Baugruppe (31) zur Ausführung der Funktion anzusprechen ist,
und daß der Mikroprozessor (1) bei Auslösung einer Funktion mittels eines Bedienelements (10) des Gerätes oder einer externen Einheit (11, 12) die ausgelöste Funktion in der Weise ausführt, daß zunächst aus der Funktionskode-Tabelle der der Funktion zugeordnete Funktionskode ermittelt wird und dann die gemäß den Angaben der Baugruppentabelle für diesen Funktionscode vorgesehene Baugruppe (31) nach Maßgabe der Daten der Baugruppentabelle zur Durchführung der ausgelösten Funktion angesprochen wird.

2. Anordnung nach Anspruch 1, dadurch gekennzeichnet, daß die Baugruppentabelle in einem EEPROM (22) abgelegt ist.

3. Anordnung nach Anspruch 1, dadurch gekennzeichnet, daß die in dem ROM-Speicher (7) abgelegte Funktionskode-Tabelle auch Daten darüber enthält, zu welchen Funktionen zusätzlich ein On-Screen-Display stattfinden soll, und daß der Mikroprozessor (1) bei Auslösung einer derartigen Funktion eine On-Screen-Display-Darstellung nach Maßgabe dieser Daten steuert.

4. Anordnung nach Anspruch 1, dadurch gekennzeichnet, daß in einem veränderbaren Speicher (22) zusätzlich eine Statustabelle abgelegt ist, welche Informationen darüber enthält, welchen Bedienelementen (10, 11, 12) an dem zu steuernden Gerät, an einer Fernbedienung oder an einer externen Steuereinheit jeweils welche Funktion zugeordnet ist.

5. Anordnung nach Anspruch 1, dadurch gekennzeichnet, daß die in der Baugruppentabelle zu jeder Baugruppe (31) zur Durchführung einer Funktion abgelegten Daten einen Offset zur Steuer-Bus-Adresse, eine Register-Adresse des für die Durchführung der Funktion zu verändernden Registers eine Anzahl der in dem Register zu verändernden Bits enthalten.

6. Anordnung nach Anspruch 5, dadurch gekennzeichnet, daß die Baugruppentabelle ferner Daten zu den Steuer-Bus-Adressen der Baugruppen (31), zu deren Prüfung sowie Werkseinstellungen und/oder Benutzereinstellungen der Baugruppen (31) enthält.

7. Anordnung nach den Ansprüchen 2 und 4, dadurch gekennzeichnet, daß die Statustabelle ebenfalls in einem EEPROM (22), vorzugsweise in dem gleichen EEPROM (22) wie die Baugruppentabelle, abgelegt ist.

8. Anordnung nach Anspruch 4, dadurch gekennzeichnet, daß die Statustabelle zusätzlich Daten zur Initialisierung der Baugruppen (31), zu deren Anzahl und zu deren Prüfung enthält.
